# EUROPÄISCHE PATENTSCHRIFT

(11) **EP 3 662 364 B1**
(45) Veröffentlichungstag und Bekanntmachung des Hinweises auf die Patenterteilung: **26.04.2023**
(21) Anmeldenummer: 19705153.5
(22) Anmeldetag: 11.02.2019
(51) Int. Cl.: G06F 8/65

(54) **SYSTEM ZUM ÜBERTRAGEN ZUMINDEST EINES AKTUALISIERUNGSPAKETS FÜR ZUMINDEST EIN STEUERGERÄT EINES KRAFTFAHRZEUGS**
SYSTEM FOR TRANSFERRING AT LEAST ONE UPDATE PACKET FOR AT LEAST ONE CONTROL UNIT OF A MOTOR VEHICLE
SYSTÈME DE TRANSFERT D'AU MOINS UN PAQUET DE MISE À JOUR POUR AU MOINS UN APPAREIL DE COMMANDE D'UN VÉHICULE AUTOMOBILE

(30) Priorität: 21.02.2018 DE 102018001347
(43) Veröffentlichungstag der Anmeldung: 10.06.2020
(73) Patentinhaber: Mercedes-Benz Group AG, 70372 Stuttgart (DE)
(72) Erfinder: BIERMANN, Sven, 74395 Mundelsheim (DE); FEIL, Volker, 71229 Leonberg (DE); FOLK, Markus, 71686 Remseck (DE); GOLDIS, Denis, 73732 Esslingen am Neckar (DE); HARR, Joerg, 72202 Nagold (DE); HOFFMANN, Daniel, 71083 Herrenberg (DE); HOHLOCH, Marcus, 70563 Stuttgart (DE); HOEHMANN, Peter, 71065 Sindelfingen (DE); NEUMEIER, Tobias, 74321 Bietigheim-Bissingen (DE); PILARSKI, Lifang, 7591 Gechingen (DE); SPERLICH, Stefan, 70176 Stuttgart (DE); WIDMAIER, Sebastian, 72186 Empfingen (DE)
(74) Vertreter: JENSEN & SON
(86) Internationale Anmeldenummer: PCT/EP2019/053275
(87) Internationale Veröffentlichungsnummer: WO 2019/162122

(56) Entgegenhaltungen:
- DE-A1-102016 210 674

## Beschreibung

Die Erfindung betrifft ein System zum Übertragen zumindest eines Aktualisierungspakets für zumindest ein Steuergerät eines Kraftfahrzeugs gemäß Anspruch 1.

Das Aktualisieren von verteilten Steuergerätverbunden stellt eine erweiterte Form einer Steuergeräteaktualisierung dar. Dabei ist es relevant, softwaretechnische Abhängigkeiten im Verbund vor dem Update zu lokalisieren und die Installation der einzelnen Softwareupdates anhand der Abhängigkeiten zu organisieren. Dazu ist eine Bildung von Steuergerätegruppen zu Domänen erforderlich, um die Datenlast beim Herunterladen (Download) im Kraftfahrzeug zu verteilen und eine Installation beschleunigen zu können. Die DE 10 2016 210 672 A1 offenbart ein Verfahren für die drahtlose Remote-Aktualisierung von Fahrzeug-Software. Dieses Verfahren umfasst ein Hosten von Manager-Software auf einem Server, bei dem es sich um einen Client-Server oder einen zentralen Server handelt, auf den der Client zugreifen kann. Es wird eine Manager-Software zum Auswählen der Zielfahrzeuggruppe und zum Erzeugen eines differenziellen Aktualisierungspakets verwendet, das einen Update-Manager umfasst. Es wird von einer Download-Manager-Software das Aktualisierungspakets zum Herunterladen in jedes der einen oder mehrere Zielfahrzeuge bereitgestellt. Es wird der Update-Manager in jedem Fahrzeug zum Aktualisieren der einen oder mehreren Ziel-Steuereinheiten verwendet.

Die DE 10 2016 210 674 A1 offenbart ein Verfahren für die weite Verbreitung von Software-Updates von Fahrzeugkomponenten, die einen Flash-Speicher umfassen, in Echtzeit. Das Verfahren umfasst: Bereitstellen eines Client-Servers zum Einleiten der Software-Updates; Bereitstellen eines Vermittlungsservers, der in Funktion mit dem Client-Server kommuniziert; Bereitstellen eines verteilten Netzwerkes, das eine Vielzahl von Kommunikationsservern umfasst, wobei jeder der Kommunikationsserver in Funktion mit einer Vorrichtung in einer Vielzahl von entsprechenden Fahrzeugen kommunizieren kann; Ansteuern der einzelnen Vorrichtungen zur Kommunikation über ein drahtloses Netzwerk mit einem aus der Vielzahl von Kommunikationsservern, um Software-Updates zu empfangen und auf elektronische Steuereinheiten (ECUs) in dem entsprechenden Fahrzeug anzuwenden; Ansteuern der einzelnen Vorrichtungen zum Erzeugen von Status-Updates und zum Kommunizieren der Status-Updates an einen Kommunikationsserver über das drahtlose Netzwerk; und Ansteuern der einzelnen Kommunikationsserver zum Erzeugen eines Datenstroms, der die Datennachrichten von der Vielzahl von entsprechenden Fahrzeugen umfasst, und zum Senden des Datenstroms an den Vermittlungsserver.

Im Stand der Technik befindet sich die Übertragungseinrichtung (Download-Manager), welche zum Leiten eines Übertragungsvorgangs des Aktualisierungspakets für das zumindest eine Steuergerät und zum Installieren des Aktualisierungspakets auf dem zumindest einen Steuergerät ausgebildet ist, kraftfahrzeugextern. Mittels dieser Übertragungseinrichtung kann dann das Aktualisierungspaket für eine Mehrzahl von Kraftfahrzeugen zur Verfügung gestellt werden. Dies hat insbesondere den Nachteil, dass nicht spezifiziert auf das Kraftfahrzeug beziehungsweise auf einen Zustand des Kraftfahrzeugs eingegangen werden kann. Dies kann dazu führen, dass der Download-Manager das Programm in eine Telematikeinheit des Kraftfahrzeugs herunterlädt, wodurch es zu einer Belastung des im Kraftfahrzeug verbauten Energiespeichers kommen kann. Dies kann zu einer Entleerung des Energiespeichers führen, wodurch das Kraftfahrzeug im Anschluss daran nicht mehr fahrtüchtig ist. Des Weiteren kann nicht auf kraftfahrzeugspezifische Besonderheiten, beispielsweise innerhalb der Kraftfahrzeugnetzwerkstruktur (Domäne) im Kraftfahrzeug eingegangen werden.

Aufgabe der vorliegenden Erfindung ist es, ein System zu schaffen mittels welchem kraftfahrzeugspezifisch ein Aktualisierungspaket für zumindest ein Steuergerät heruntergeladen und installiert werden kann.

Diese Aufgabe wird durch ein System gemäß dem unabhängigen Patentantspruch gelöst Ein Aspekt der Erfindung betrifft ein System zum Übertragen zumindest eines Aktualisierungspakets für zumindest ein Steuergerät eines Kraftfahrzeugs gemäß Anspruch 1.

Es ist vorgesehen, dass die zumindest eine Übertragungseinrichtung kraftfahrzeugintern angeordnet ist. Dadurch ist es ermöglicht, dass im gesamten Kraftfahrzeugnetzwerk das Aktualisierungspaket entsprechend verteilt und die Installation überwacht werden kann. Somit können ganze Kraftfahrzeug- oder Steuergerätegruppen unabhängig von der Fahrzeugarchitektur gezielt und flexibel mit Aktualisierungspaketen versorgt werden. Dabei ist es insbesondere möglich, dass die Aktualisierungspakete nach entsprechenden Prioritäten in einer vorgegebenen Reihenfolge durchgeführt werden können. Somit kann eine kraftfahrzeugspezifische Aktualisierung für das zumindest eine Steuergeräte durchgeführt werden. Insbesondere können bei einer Mehrzahl von Steuergeräten unterschiedliche Abhängigkeiten der Steuergeräte untereinander berücksichtig werden. Des Weiteren kann durch die erfindungsgemäße Lösung ein beschleunigter Installationsprozess realisiert werden.

Ferner ist vorgesehen, dass der Übertragungsvorgang des zumindest einen Aktualisierungspakets für die Mehrzahl von Übertragungseinrichtungen und die Installation auf dem zumindest einen Steuergerät mittels einer kraftfahrzeuginternen Leiteinrichtung leitbar ist. Mit anderen Worten, sollte eine Mehrzahl von Übertragungseinrichtungen im Kraftfahrzeug verbaut sein, so kann mittels einer Leiteinrichtung das Herunterladen der Aktualisierungspakete gesteuert werden. Dadurch kann beispielsweise eine Hierarchie innerhalb des Kraftfahrzeugnetzwerks geschaffen werden, sodass beispielsweise Komponenten mit einer höheren Priorität zuerst aktualisiert werden können, während beispielsweise Komponenten mit einer niedrigeren Priorität erst später aktualisiert werden können. Die Leiteinrichtung kann dann als sogenannter Master bezeichnet werden, welcher beispielsweise eine übergreifende Kampagnen-ID einführt, sodass die jeweiligen Übertragungseinrichtungen wissen, ob sie Teil der übergreifenden Kampagne sind und somit an der Aushandlung des Aktualisierungspakets mit teilnehmen müssen. Für den Austausch der Informationen zwischen den jeweiligen Übertragungseinrichtungen und den aktualisierbaren Steuergeräten ist eine gemeinsame Schnittstelle definiert vorhanden, die verpflichtend für alle Übertragungseinrichtungen umgesetzt ist.

Ferner ist eine Übertragungseinrichtung der Mehrzahl von Übertragungseinrichtungen als Leiteinrichtung ausgewählt, welche das Leiten des Übertragungsvorgangs für die Mehrzahl von Übertragungseinrichtungen und die Installation auf dem zumindest einen Steuergerät durchführt. Werden mehrere Aktualisierungspakete über mehrere Domänen hinweg durchgeführt, so kann insbesondere eine der Übertragungseinrichtungen eine Domäne als leitende Einheit definiert werden, als ein sogenannter Master. Der Master wird im Kraftfahrzeug für eine Kampagne gewählt und ist dafür verantwortlich, die Aktualisierungen in den Steuergeräten seiner Domäne zu aktivieren, aber auch die Aktualisierungen in anderen Domänen zu steuern. Das ist relevant, da ein Steuergerät in einer verteilten Applikation neue Parameter einführen kann, auf die sich eine Applikation in einem anderen Steuergerät bezieht. Folglich ist es notwendig, stets diese Komponente zu bevorzugen. Dies führt zu einer Hierarchiebildung unter den Aktualisierungen, die der Master steuert. Der Master ist insbesondere durch eine starre Implementierung der Master-Rolle in einen der Übertragungseinrichtungen des Kraftfahrzeugs vorgenommen. Ein Kriterium für eine solche Master-Wahl kann sein, dass diese Übertragungseinrichtung zur Basisausstattung eines Kraftfahrzeugs gehört und nicht von Sonderausstattungen abhängig ist.

Bei dem zumindest einen Steuergerät kann es sich insbesondere um ein elektronisches Steuergerät (Electrical Control Unit - ECU) handeln. Das Steuergerät ist insbesondere als elektronische Recheneinrichtung ausgebildet. Bei der kraftfahrzeugexternen Speichereinrichtung handelt es sich insbesondere um einen Server, welcher beispielsweise mit einem Netzwerk verbunden sein kann. Bei der Übertragungseinrichtung des Systems handelt es sich insbesondere um einen sogenannten Download-Manager, welcher vorliegend kraftfahrzeugintern ausgebildet ist und zum Leiten beziehungsweise Managen des Übertragungsvorgangs des Aktualisierungspakets ausgebildet ist und zum Installieren des Aktualisierungspakets auf dem zumindest einen Steuergerät ausgebildet ist. Beispielsweise kann das Kraftfahrzeug eine Kommunikationseinrichtung aufweisen, mittels welcher das Kraftfahrzeug mit der Kommunikationseinrichtung der Speichereinrichtung kommunizieren kann und das Aktualisierungspaket empfangbar ist. Bei dieser Kommunikationseinrichtung kann es sich beispielsweise um eine sogenannte Telematik-Steuereinheit (Telematic Control Unit - TCU) handeln.

Unter Leiten ist insbesondere das Steuern der Installation und/oder das Berücksichtigen von funktionalen Abhängigkeiten zu verstehen. Des Weiteren kann unter Leiten das "Anstoßen" zum Installieren und/oder zum Herunterladen des Aktualisierungspaktes von der externen Speichereinrichtung angesehen werden. Unter Installieren ist insbesondere die Steuerung von der Übertragung von beispielsweise Nutzdaten an die Steuergeräte zu verstehen. Dabei kann vorgesehen, dass die Übertragungseinrichtung die Installation gegenüber den Steuergeräten leitet und direkt durchführt. Ebenfalls möglich ist, dass die Übertragungseinrichtung die Installation leitet, indem diese dem Steuergerät Steuerinformationen zukommen lässt und das Steuergerät sich selbst die Software, was dem Aktualisierungspaket entspricht, von der externen Speichereinrichtung herunterlädt und installiert. Somit kann das Steuergerät selbst als Kommunikationseinrichtung ausgebildet sein, jedoch ohne eine direkte Verbindung bezüglich der Steuerdaten zur externen Kommunikationseinrichtung aufzuweisen.

Insbesondere ist vorgesehen, dass sich in der kraftfahrzeugexternen Speichereinrichtung sogenannte Aktualisierungspaketkampagnen unter der Verwendung von Fahrzeuginformationen der Übertragungseinrichtung als Regelwerk definieren lassen. Die Regeln werden auf alle Kraftfahrzeuge, welche in der Speichereinrichtung abgespeichert sind, verwendet, die auf die gesuchten Merkmale passen. Damit kann eine Kampagne dynamisch gebildet werden, ohne zuvor den genauen Umfang der Kraftfahrzeuge zu kennen. Trifft eine Regel auf ein Kraftfahrzeug zu, so synchronisiert die kraftfahrzeugexterne Speichereinrichtung zunächst Steuerdaten mit der Übertragungseinrichtung, um Art und Umfang des Aktualisierungspakets dem Kraftfahrzeug bekanntzugeben. Im Anschluss daran wird die Übertragungseinrichtung die Nutzdaten des Aktualisierungspakets herunterladen und in den betroffenen Steuergeräten installieren.

Über die kraftfahrzeugexterne Speichereinrichtung lassen sich somit Kampagnen steuern, zum Beispiel Starten, Pausieren und Stoppen. Ist eine Kampagne definiert und gestartet, läuft sie so lange, bis das Kraftfahrzeug des ermittelten Umfangs bearbeitet wurde. Dabei wird zwischen erfolgreichen und fehlerhaften Aktualisierungen unterschieden. Für fehlerhafte Aktualisierungen kann das Aktualisierungspaket wieder neu gestartet werden. Wird eine Kampagne pausiert, so werden die Regeln nicht weiter an die Kraftfahrzeuge übertragen, sodass nur Kraftfahrzeuge, die bereits den Download gestartet haben, die Aktualisierungspakete weiter herunterladen. Beim Stoppen der Kampagne ist die kraftfahrzeugexterne Speichereinrichtung in der Lage, über ein Kommando den Download und die Installation eines Aktualisierungspakets in der Übertragungseinrichtung zu unterbrechen. Damit ist auch die vorzeitige Unterbrechung einer Aktualisierungspaketkampagne möglich, wenn zum Beispiel ein Aktualisierungspaket kritische Fehler enthalten sollte und dessen Verbreitung sofort unterbunden werden sollte.

Über den Synchronisationsmechanismus ist die kraftfahrzeugexterne Speichereinrichtung in der Lage, Statusinformationen über den Download und die Installation zu erhalten und diese im Kampagnenmanagement zu überwachen. Darüber hinaus werden Fehler und Installationsabbrüche gemeldet, die so überwacht werden können.

Die Basis für den Datenaustausch zwischen Kraftfahrzeug und der kraftfahrzeugexternen Speichereinrichtung bildet einen Synchronisationsmechanismus, der über die Übertragungseinrichtung Softwareidentifikationsmerkmale von den aktualisierenden Steuergeräten im Kraftfahrzeug sammelt. Diese Übertragungseinrichtung synchronisiert sich regelmäßig mit der kraftfahrzeugexternen Speichereinrichtung, sodass alle updatefähigen Kraftfahrzeuge gepuffert werden können. Empfängt die Übertragungseinrichtung durch die Synchronisation mit der kraftfahrzeugexternen Speichereinrichtung einen neuen Aktualisierungsauftrag, bekommt diese darin Steuerdaten für das Aktualisierungspaket mitgeteilt. Mit den Steuerdaten ist die Übertragungseinrichtung in der Lage, auf den betreffenden Steuergeräten im Kraftfahrzeugnetzwerk unter der Berücksichtigung von unterschiedlichen Abhängigkeiten diese auf dem Steuergerät zu aktualisieren.

Die Abhängigkeiten der Softwaren werden durch einen umfassenden Softwareverbund behandelt, der durch die Übertragungseinrichtung interpretiert wird und durch die Übertragungseinrichtung die Softwareanteile an das jeweilige Steuergerät übertragen wird. Als Merkmal dienen zum Beispiel die Fahrzeugidentifikationsnummer, die momentan verfügbare Softwareversion und die Softwareidentifikationsnummer.

Insbesondere kann vorgesehen sein, dass Softwareverbunde, bestehend aus einer Mehrzahl von Softwaren oder Softwareteile, als Aktualisierungspaket bezeichnet werden, darunter ist jedoch eine lose Kopplung von Softwaren und Updateinformationen zu verstehen.

Das System kann insbesondere für ein einzelnes Kraftfahrzeug sowie für eine Kraftfahrzeuggruppe bereitgestellt werden. Mit anderen Worten kann mittels des Systems für ein einzelnes Kraftfahrzeug das Aktualisierungspaket bereitgestellt werden, wobei das Kraftfahrzeug die Übertragungseinrichtung aufweist. Ebenfalls möglich ist, dass für eine Mehrzahl von Kraftfahrzeugen das System das Aktualisierungspaket bereitstellt, wobei jedes der einzelnen Kraftfahrzeuge dann jeweilig eine Übertragungseinrichtung aufweist.

Gemäß einer vorteilhaften Ausgestaltungsform kann die zumindest eine Übertragungseinrichtung abhängig von einem Entscheidungskriterium den Übertragungsvorgang und die Installation auf dem zumindest einen Steuergerät leiten. Somit kann spezifisch auf die Funktion beziehungsweise auf die Netzwerkarchitektur im Kraftfahrzeug eingegangen werden. Dadurch kann kraftfahrzeugspezifisch das Aktualisierungspaket auf dem zumindest einen Steuergerät installiert werden.

Es hat sich weiterhin als vorteilhaft erwiesen, wenn die Übertragungseinrichtung derart ausgebildet ist, dass die Übertragungseinrichtung in Abhängigkeit eines funktionalen Entscheidungskriteriums den Übertragungsvorgang leitet und die Installation auf dem zumindest einen Steuergerät durchführt. Ein solches funktionales Entscheidungskriterium kann beispielsweise eine aktive Stromversorgung für das Kraftfahrzeug sein. Mit anderen Worten kann beispielsweise lediglich bei einer eingeschalteten Zündung ein Herunterladen des Aktualisierungspakets in die Übertragungseinrichtung durchgeführt werden. Somit kann beispielsweise verhindert werden, dass ein elektrischer Energiespeicher des Kraftfahrzeugs entladen wird.

In einer weiteren vorteilhaften Ausgestaltungsform kann die Übertragungseinrichtung derart ausgebildet sein, dass die Übertragungseinrichtung in Abhängigkeit eines Entscheidungskriteriums, welche eine physische Komponente des Steuergeräts betrifft, den Übertragungsvorgang leiten und die Installation auf dem zumindest einen Steuergerät durchführen. Bei der physischen Komponente handelt es sich insbesondere um eine sogenannte Hardware. Somit kann eine hardwareseitige Abhängigkeit bei der Aktualisierung mit dem Aktualisierungspaket bereitgestellt werden. Eine hardwareseitige Abhängigkeit ist zum Beispiel die Anbindung über ein Bus-System.

Ebenfalls vorteilhaft ist, wenn die Übertragungseinrichtung derart ausgebildet ist, dass die Übertragungseinrichtung in Abhängigkeit eines Entscheidungskriteriums, welches eine veränderbare Komponente des Steuergeräts betrifft, den Übertragungsvorgang leitet und die Installation auf dem zumindest einen Steuergerät durchführt. Bei der veränderbaren Komponente des Steuergeräts handelt es sich insbesondere um eine sogenannte Software. Softwareseitige Abhängigkeiten können funktional in der Software verschiedener Steuergeräte eines Systems, aber auch systemübergreifende Abhängigkeiten sein, die sich als Softwareverbund beschreiben lassen. Gemeinsam genutzte Parameter in verschiedenen Softwaren verschiedener Steuergeräte ist hierzu ein Beispiel. Dabei ist zu beachten, dass Steuergerätesoftwaren, die solche Abhängigkeiten aufweisen, zusammengehörig aktualisiert werden müssen. Die Abhängigkeiten der Softwaren werden durch den umfassenden Softwareverbund behandelt, der durch die Übertragungseinrichtung interpretiert werden und werden durch die Übertragungseinrichtung die Softwareanteile an das jeweilige Steuergerät übertragen. Als Merkmale dienen zum Beispiel die Fahrzeugidentifikationsnummer, die momentan verfügbare Softwareversion und die Softwareidentifikationsnummer.

In einer weiteren vorteilhaften Ausgestaltungsform kann das Kraftfahrzeug eine Mehrzahl von Steuergeräten aufweisen und die Übertragungseinrichtung den Übertragungsvorgang des Aktualisierungspakets für die Mehrzahl von Steuergeräten leiten und zum Installieren des Aktualisierungspakets auf der Mehrzahl von Steuergeräten ausgebildet sein. Somit kann das Aktualisierungspaket für unterschiedliche Steuergeräte über die eine Übertragungseinrichtung verteilt werden. Es können beispielsweise dann durch die kraftfahrzeugexterne Speichereinrichtung entsprechende Kampagnen zur Steuerung des Aktualisierungspakets für die verschiedenen Steuergeräte erstellt werden und kontrolliert werden. Insbesondere ist vorgesehen, dass die Mehrzahl von Steuergeräten bzw. der Netzstruktur als Domäne bezeichnet werden kann. Insbesondere kann vorgesehen sein, sollte die Mehrzahl der Steuergeräte von der Kampagne erfasst werden, dass auch in der kraftfahrzeugexternen Speichereinrichtung die jeweiligen Steuergeräte und die Übertragungseinrichtung benannt wird. Die Struktur der Teilnetze, dieser sogenannten Domänen, muss dabei bekannt sein und berücksichtigt werden. Über eindeutige Kennung für die jeweilige Domäne und die globale Kampagne wird sichergestellt, dass die Übertragungseinrichtung ihre untergeordneten Steuergeräte rechtzeitig aktualisiert.

Sobald die Steuerdaten mit der Übertragungseinrichtung synchronisiert worden sind, ist die Übertragungseinrichtung in der Lage, eigenständig das Aktualisierungspaket von der kraftfahrzeugexternen Speichereinrichtung herunterzuladen. Ist das Aktualisierungspaket dann heruntergeladen, beginnt die Übertragungseinrichtung selbstständig mit der Installation in den jeweiligen benannten Steuergeräten.

Gemäß einer weiteren vorteilhaften Ausgestaltungsform kann das Kraftfahrzeug eine Mehrzahl von Steuergeräten aufweisen und die Übertragungseinrichtung den Übertragungsvorgang einer Mehrzahl von Aktualisierungspaketen für die Mehrzahl von Steuergeräten leiten und zum Installieren der Mehrzahl der Aktualisierungspakete auf der Mehrzahl von Steuergeräten ausgebildet sein und/oder die Übertragungseinrichtung funktionsreduziert ausgebildet ist, so dass diese den Übertragungsvorgang und ein Weiterleiten des Aktualisierungspakets an die Mehrzahl von Steuergeräten durchführt. Somit ist es ermöglicht, dass beispielsweise die Aktualisierungspakete unterschiedlich ausgebildet sein können und somit durch einmaliges Herunterladen der Mehrzahl der Aktualisierungspakete mittels der Übertragungseinrichtung die jeweiligen Steuergeräte mit den jeweiligen Aktualisierungspaketen aktualisiert werden können. Dadurch kann ressourcenschonend eine Aktualisierung der jeweiligen Steuergeräte durchgeführt werden. Es ist möglich, dass eine funktionsreduzierte Übertragungseinrichtung in den jeweiligen Steuergeräten integriert ist, die das Herunterladen der Nutzdaten/Steuerdaten und die Installation auf die Steuergeräte leiten beziehungsweise steuern kann. Die Übertragungseinrichtung ist dann insbesondere dazu ausgebildet, lediglich die Datenübertragung von der kraftfahrzeugexternen Speichereinrichtung beziehungsweise von der Kommunikationseinrichtung und möglicherweise das Herunterladen der Aktualisierungspaketinformationen von der externen Speichereinrichtung durchzuführen. Dadurch kann auf einfache Art und Weise das zumindest eine Aktualisierungspaket für das zumindest eine Steuergerät heruntergeladen und installiert werden.

Ebenfalls vorteilhaft ist, wenn das Kraftfahrzeug eine Mehrzahl von Übertragungseinrichtungen aufweist, wobei eine jeweilige Übertragungseinrichtung der Mehrzahl der Übertragungseinrichtungen den jeweiligen Übertragungsvorgang separat leitet und zum Installieren des Aktualisierungspakets für zumindest ein jeweiliges der jeweiligen Übertragungseinrichtung zugeordnetes Steuergerät ausgebildet ist. Um mehrere Steuergeräte im Kraftfahrzeug mit den entsprechenden Aktualisierungen zu erreichen, kann die Mehrzahl der Übertragungseinrichtungen im Kraftfahrzeug verbaut sein, die jeweils eine eigene Synchronisation mit der kraftfahrzeugexternen Speichereinrichtung durchführen. Somit können zum einen in der kraftfahrzeugexternen Speichereinrichtung mehr Steuergeräte eines bestimmten Typs, beispielsweise von Entertainment- oder sicherheitsrelevanten Komponenten, erfasst werden, da eine Übertragungseinrichtung eine feste Steuergerätezuordnung im Kraftfahrzeug besitzt und somit eine definierte Kommunikationsstruktur vorgegeben ist. Zum anderen können dadurch auch neue Steuergerätetypen in der kraftfahrzeugexternen Speichereinrichtung durch die Anbindung einer neuen Aktualisierungsdomäne über deren Übertragungseinrichtung erfasst werden. Somit kann kraftfahrzeugspezifisch und domänenspezifisch eine Aktualisierung der jeweiligen Steuergeräte im Kraftfahrzeug durchgeführt werden.

Ebenfalls vorteilhaft ist, wenn die Auswahl der Übertragungseinrichtung, welche eine Übertragungsvorgang und die Installation auf dem zumindest einen Steuergerät bei einer Mehrzahl von Übertragungseinrichtungen leitet, abhängig von dem zu übertragenden Aktualisierungspaket ist. Es handelt sich somit um eine dynamische Auswahl des Masters. Dies kann beispielsweise über ein Kommunikationsprotokoll zwischen den Übertragungseinrichtungen dynamisch für die jeweilige Aktualisierungspaketkampagne vorgenommen werden. In diesem Fall muss der Master gewählt werden, sobald die Übertragungseinrichtung aus dem Aktualisierungspaket erkennt, dass es sich um eine Domänen-übergreifende Aktualisierung handelt. Diese Übertragungseinrichtung muss dann alle anderen Übertragungseinrichtungen darüber benachrichtigen und die Wahl initiieren, damit sie die nachfolgenden Download- und Installationsaktivitäten der einzelnen Domänen steuern kann. Ebenfalls kann hier als Kriterium für die Master-Wahl sein, dass diese Übertragungseinrichtung zur Basisausstattung eines Kraftfahrzeugs gehört und nicht von Sonderausstattungen abhängig ist. Die Wahl des Update Masters muss für jedes Aktualisierungspaket neu durchgeführt werden. Hierzu muss für den Austausch der Informationen zwischen den Übertragungseinrichtungen und zu den aktualisierbaren Steuergeräten eine gemeinsame Schnittstelle definiert werden.

Weiterhin vorteilhaft ist, wenn von der kraftfahrzeugexternen Speichereinrichtung eine Aktualisierungspaketinformation vor dem Übertragungsvorgang des Aktualisierungspakets an die Übertragungseinrichtung übertragbar ist und/oder von der Speichereinrichtung eine Aktualisierungspaketinformation vor dem Übertragungsvorgang des Aktualisierungspakets an die Übertragungseinrichtung übertragbar ist, wobei die Aktualisierungspaketinformation eine Information über einen zur Speichereinrichtung separaten weiteren Speicherort des Aktualisierungspakets enthält und die Übertragungseinrichtung dazu ausgebildet ist, von dem weiteren Speicherort das Aktualisierungspaket herunterzuladen. Mit anderen Worten wird vor dem eigentlichen Aktualisierungspaket eine Information bereitgestellt, mittels welcher die Übertragungseinrichtung entscheiden kann, wann sie beispielsweise das Aktualisierungspaket herunterlädt. Dies kann beispielsweise abhängig von den funktionalen, hardware- beziehungsweise softwareseitigen Entscheidungskriterien sein. Dadurch kann spezifiziert für das Kraftfahrzeug beziehungsweise für die Situation des Kraftfahrzeugs das Herunterladen realisiert werden. Ebenfalls vorteilhaft ist angegeben, dass die Aktualisierungspaketinformation eine Information über den weiteren Speicherort enthält. Beispielsweise kann der weitere Speicherort ein Netzwerk sein, von welchem dann das Aktualisierungspaket heruntergeladen werden kann. Somit kann das Aktualisierungspaket nicht nur auf der kraftfahrzeugexternen Speichereinrichtung, sondern beispielsweise auch auf dem weiteren Speicherort abgespeichert sein. Durch die kraftfahrzeugexterne Speichereinrichtung wird lediglich die Information über den weiteren Speicherort des Aktualisierungspakets zur Verfügung gestellt. Die Übertragungseinrichtung kann dann selbstständig von dem weiteren Speicherort das Aktualisierungspaket herunterladen.

Gemäß einer weiteren vorteilhaften Ausgestaltungsform kann das zumindest eine Steuergerät als ein Steuergerät der Übertragungseinrichtung oder als ein Steuergerät für eine Funktionseinheit des Kraftfahrzeugs ausgebildet sein. Sollte beispielsweise die Übertragungseinrichtung von der Aktualisierung selbst betroffen sein, so muss das Steuergerät der Übertragungseinrichtung getrennt von anderen zu aktualisierenden Steuergeräten betrachtet werden, da eine Aktualisierung der Übertragungseinrichtung auch die Aktualisierung weiterer Steuergeräte im Fahrzeugnetzwerk, insbesondere in der Domäne, beeinträchtigen kann. Somit kann dann beispielsweise ein eigenes Aktualisierungspaket bereitgestellt werden. Alternativ kann das Kraftfahrzeug über eine definierte Teilnehme, den sogenannten Domänen, im Kraftfahrzeug den Datendownload im Kraftfahrzeug verteilen. Die Domänen können gezielt über Regeln in der kraftfahrzeugexternen Speichereinrichtung angesprochen werden, sodass hier Aktualisierungspakete gezielt für diese Domänen gebildet werden können. Die Übertragungseinrichtung einer Domäne muss nachfolgend die Aktualisierungspakete der ihr zugeordneten Steuergeräte koordinieren und priorisieren. Bei der Funktionseinheit kann es sich beispielsweise um ein Assistenzsystem oder ein Entertainmentsystem handeln, welche nicht Teil der Übertragungseinrichtung sind. Neben den genannten Beispielen sind noch weitere Funktionseinheiten möglich, welche im Kraftfahrzeug verbaut sind. Die Aufzählung der Funktionseinheiten ist somit nur beispielhaft und nicht abschließend zu sehen.

In einer weiteren vorteilhaften Ausgestaltungsform kann mittels der Übertragungseinrichtung ein Statusinformationssignal an die kraftfahrzeugexterne Speichereinrichtung übertragbar sein, wobei das Statusinformationssignal ein Status bezüglich des Übertragungsvorgangs und/oder ein Status bezüglich der Installation auf dem Steuergerät umfassen kann. Mit anderen Worten kann mittels des Statusinformationssignals eine Information über den Installationszustand beziehungsweise den Downloadzustand des Aktualisierungspakets an die kraftfahrzeugexterne Steuerungseinrichtung übertragen werden. Somit kann mittels der kraftfahrzeugexternen Speichereinrichtung der Status überprüft werden.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Ansicht eines Ausführungsbeispiels eines Systems; und
- Fig. 2: eine weitere schematische Ansicht einer weiteren Ausführungsform des Systems.

In den Figuren sind gleiche oder funktionsgleiche Elemente mit den gleichen Bezugszeichen versehen.

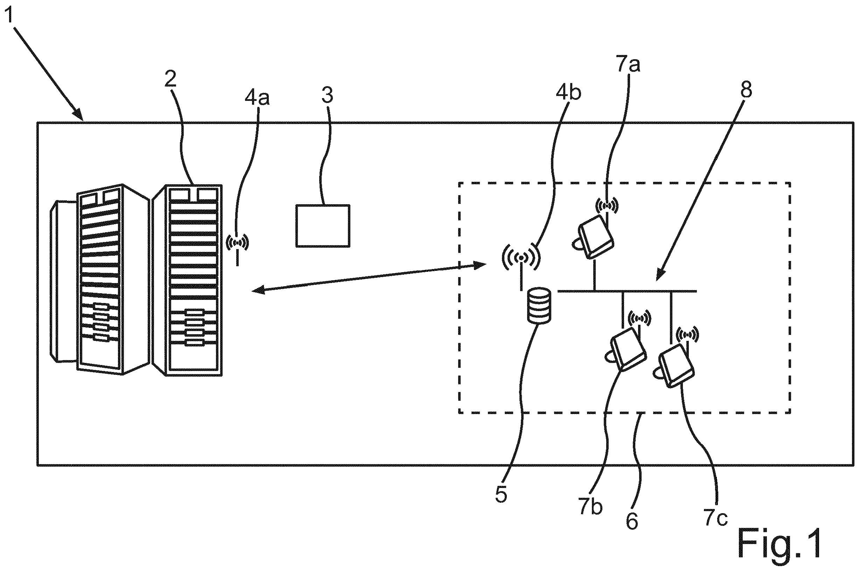

Fig. 1 zeigt in schematischer Ansicht eine Ausführungsform eines Systems 1. Das System 1 weist eine kraftfahrzeugexterne Speichereinrichtung 2 auf. Die kraftfahrzeugexterne Speichereinrichtung 2 ist zum Abspeichern eines Aktualisierungspakets 3 ausgebildet. Ferner weist das System 1 eine Kommunikationseinrichtung 4a, 4b auf, welche zum Übertragen des Aktualisierungspakets 3 von der kraftfahrzeugexternen Speichereinrichtung 2 drahtlos an zumindest eine Übertragungseinrichtung 5 des Systems 1 ausgebildet ist. Im vorliegenden Beispiel ist die Kommunikationseinrichtung 4a, 4b aus einem ersten Kommunikationseinrichtungselement 4a, welches insbesondere an der kraftfahrzeugexternen Speichereinrichtung 2 angeordnet ist, ausgebildet und einem zweiten Kommunikationseinrichtungselement 4b, welches insbesondere in einem Kraftfahrzeug 6 des Systems 1 ausgebildet ist.

Das Kraftfahrzeug 6 weist ferner zumindest ein Steuergerät 7a, 7b, 7c auf. Im vorliegenden Beispiel weist das Kraftfahrzeug 6 insbesondere drei Steuergeräte 7a, 7b, 7c auf.

Die Übertragungseinrichtung 5 sowie die Steuergeräte 7a, 7b, 7c bilden im vorliegenden Beispiel ein Kraftfahrzeugnetzwerk, welches auch als Domäne 8 bezeichnet werden kann.

Es ist vorgesehen, dass die Übertragungseinrichtung 5 kraftfahrzeugintern angeordnet ist. Die Übertragungseinrichtung 5 ist dazu ausgebildet, einen Übertragungsvorgang des Aktualisierungspakets 3 für das zumindest eine Steuergerät 7a, 7b, 7c zu leiten, insbesondere zu managen, und ist zum Installieren des Aktualisierungspakets 3 auf dem zumindest einen Steuergerät 7a, 7b, 7c ausgebildet.

In der Fig. 1 ist somit ein System 1 zur Verteilung und Kontrolle von verteilten Steuergeräteaktualisierungen, mit anderen Worten dem Aktualisierungspaket 3, in der Domäne 8 gezeigt. Dort können insbesondere Hardware- und Softwareidentifikationsdaten der entfernt aktualisierbaren Steuergeräte 7a, 7b, 7c von der Übertragungseinrichtung 5 im Kraftfahrzeug 6 gesammelt und mit der kraftfahrzeugexternen Speichereinrichtung 2 drahtlos synchronisiert werden. Die kraftfahrzeugexterne Speichereinrichtung 2 ist damit in der Lage, Software für unterschiedliche Steuergeräte 7a, 7b, 7c an verschiedene Kraftfahrzeuge 6 zu verteilen, Kampagnen zur Steuerung des Aktualisierungspakets 3 in die verschiedenen Steuergeräte 7a, 7b, 7c zu erstellen und zu kontrollieren. Darüber hinaus werden dort Statusinformationen der Übertragungseinrichtung 5 und der Aktualisierungsverlauf überwacht.

Es ist insbesondere vorgesehen, dass das zumindest eine Steuergerät 7a, 7b, 7c als ein Steuergerät 7a, 7b, 7c der Übertragungseinrichtung 5 oder als ein Steuergerät 7a, 7b, 7c für eine Funktionseinheit des Kraftfahrzeugs 6 ausgebildet ist. Als Funktionseinheit kann beispielsweise ein kraftfahrzeuginternes System wie beispielsweise ein Assistenzsystem oder eine Entertainmentanlage bezeichnet werden. Diese beispielhafte Aufführung für die Funktionseinheit ist lediglich beispielhaft zu sehen und keinesfalls abschließend.

Es ist möglich, dass eine funktionsreduzierte Übertragungseinrichtung 5 in den jeweiligen Steuergeräten 7a, 7b, 7c integriert ist, die das Herunterladen der Nutzdaten/Steuerdaten und die Installation auf die Steuergeräte 7a, 7b, 7c leiten beziehungsweise steuern kann. Die Übertragungseinrichtung 5 ist dann insbesondere dazu ausgebildet, lediglich die Datenübertragung von der kraftfahrzeugexternen Speichereinrichtung 2 beziehungsweise von der Kommunikationseinrichtung 4a und möglicherweise das Herunterladen der Aktualisierungspaketinformationen von der externen Speichereinrichtung 2 durchzuführen.

Des Weiteren kann mittels der Übertragungseinrichtung 5 ein Statusinformationssignal an die kraftfahrzeugexterne Speichereinrichtung 2 übertragbar sein, wobei das Statusinformationssignal einen Status bezüglich des Übertragungsvorgangs und/oder einen Status bezüglich der Installation auf dem Steuergerät 7a, 7b, 7c umfassen kann.

Insbesondere ist vorgesehen, dass die zumindest eine Übertragungseinrichtung 5 abhängig von einem Entscheidungskriterium den Übertragungsvorgang und die Installation auf dem zumindest einen Steuergerät 7a, 7b, 7c leitet. Ferner kann insbesondere vorgesehen sein, dass die Übertragungseinrichtung 5 derart ausgebildet ist, dass die Übertragungseinrichtung 5 in Abhängigkeit eines funktionellen Entscheidungskriteriums den Übertragungsvorgang leitet und die Installation auf dem zumindest einen Steuergerät 7a, 7b, 7c durchführt. Ebenfalls kann vorgesehen sein, dass die Übertragungseinrichtung 5 derart ausgebildet ist, dass die Übertragungseinrichtung 5 in Abhängigkeit eines Entscheidungskriteriums, welches eine physische Komponente des Steuergeräts 7a, 7b, 7c betrifft, den Übertragungsvorgang leitet und die Installation auf dem zumindest einen Steuergerät 7a, 7b, 7c durchführt. Beispielsweise kann es sich bei der physischen Komponente um eine Hardware des Steuergeräts 7a, 7b, 7c handeln. Ebenfalls möglich ist, dass die Übertragungseinrichtung 5 derart ausgebildet ist, dass die Übertragungseinrichtung 5 in Abhängigkeit eines Entscheidungskriteriums, welches eine veränderbare Komponente des Steuergeräts 7a, 7b, 7c betrifft, den Übertragungsvorgang leitet und die Installation auf dem zumindest einen Steuergerät 7a, 7b, 7c durchführt. Bei der veränderbaren Komponente kann es sich insbesondere um eine sogenannte Software handeln.

Ferner kann vorgesehen sein, dass das Kraftfahrzeug 6 eine Mehrzahl von Steuergeräten 7a, 7b, 7c aufweist und die Übertragungseinrichtung 5 den Übertragungsvorgang des Aktualisierungspakets 3 für die Mehrzahl von Steuergeräten 7a, 7b, 7c leitet und zum Installieren des Aktualisierungspakets 3 auf der Mehrzahl von Steuergeräten 7a, 7b, 7c ausgebildet ist. Ebenfalls möglich ist, dass das Kraftfahrzeug 6 eine Mehrzahl von Steuergeräten 7a, 7b, 7c aufweist und die Übertragungseinrichtung 5 den Übertragungsvorgang einer Mehrzahl von Aktualisierungspaketen 3 für die Mehrzahl von Steuergeräten 7a, 7b, 7c leitet und zum Installieren der Mehrzahl der Aktualisierungspakete 3 auf der Mehrzahl von Steuergeräten 7a, 7b, 7c ausgebildet ist.

In der kraftfahrzeugexternen Speichereinrichtung 2 lassen sich Softwareupdatekampagnen, mit anderen Worten Aktualisierungspakete 3, unter der Verwendung von Fahrzeuginformationen der Übertragungseinrichtung 5 als Regelwerk definieren. Die Regeln werden auf alle Kraftfahrzeuge 6 in der kraftfahrzeugexternen Speichereinrichtung 2 angewendet, die auf die gesuchten Merkmale passen. Damit kann eine Kampagne dynamisch gebildet werden, ohne zuvor den genauen Umfang der Kraftfahrzeuge 6 zu kennen. Trifft eine Regel auf ein Kraftfahrzeug 6 zu, synchronisiert die kraftfahrzeugexterne Speichereinrichtung 2 zunächst Steuerdaten mit der Übertragungseinrichtung 5, um Art und Umfang des Aktualisierungspakets 3 dem Kraftfahrzeug 6 bekanntzugeben. Im Anschluss wird die Übertragungseinrichtung 5 die Nutzdaten des Aktualisierungspakets 3 herunterladen und in den betroffenen Steuergeräten 7a, 7b, 7c installieren.

Mittels der kraftfahrzeugexternen Speichereinrichtung 2 lassen sich Kampagnen steuern, zum Beispiel Starten, Pausieren und Stoppen. Ist eine Kampagne definiert und gestartet, läuft sie so lange, bis alle Kraftfahrzeuge 6 des ermittelten Umfangs bearbeitet wurden. Dabei wird zwischen erfolgreichen und fehlerhaften Aktualisierungen unterschieden. Für fehlerhafte Aktualisierungen kann das Aktualisierungspaket 3 erneut gestartet werden. Wird eine Kampagne pausiert, so werden die Regeln nicht weiter an die Kraftfahrzeuge 6 übertragen, sodass nur Kraftfahrzeuge 6, die bereits den Download, mit anderen Worten das Herunterladen, gestartet haben, das Aktualisierungspaket 3 weiter herunterladen. Beim Stoppen der Kampagne ist die kraftfahrzeugexterne Speichereinrichtung 2 in der Lage, über ein Kommando den Download und die Installation des Aktualisierungspakets 3 in der Übertragungseinrichtung 5 zu unterbrechen. Damit ist auch die vorzeitige Unterbrechung einer Aktualisierung der Paketkampagne denkbar, wenn zum Beispiel ein softwareupdatekritischer Fehler enthalten sein sollte und dessen Verbreitung sofort unterbunden werden muss.

Über einen Synchronisationsmechanismus ist die kraftfahrzeugexterne Speichereinrichtung 2 in der Lage, Statusinformationen über den Download und die Installation zu erhalten und diese in einem Kampagnemanagement zu überwachen. Darüber hinaus werden Fehler und Installationsabbrüche gemeldet, die so überwacht werden können.

Die Basis für den Datenaustausch zeigt die Fig. 1, welche über die Übertragungseinrichtung 5 Softwareidentifikationsmerkmale von den zu aktualisierenden Steuergeräten 7a, 7b, 7c im Kraftfahrzeug sammelt. Die Übertragungseinrichtung 5 synchronisiert sich regelmäßig mit der kraftfahrzeugexternen Speichereinrichtung 2, sodass alle updatefähigen Kraftfahrzeuge gepuffert werden können. Empfängt die Übertragungseinrichtung 5 durch die Synchronisation mit der kraftfahrzeugexternen Speichereinrichtung 2 einen neuen Aktualisierungsauftrag, bekommt sie darin Steuerdaten für das Update mitgeteilt. Mit den Steuerdaten ist die Übertragungseinrichtung 5 in der Lage, selbstständig Aktualisierungspakete 3 von einer definierten Quelle herunterzuladen und auf den betreffenden Steuergeräten 7a, 7b, 7c in der Domäne 8 unter der Berücksichtigung von funktionalen Abhängigkeiten zu aktualisieren. Eine solche funktionale Abhängigkeit kann zum Beispiel eine aktive Stromversorgung für das Kraftfahrzeug sein.

Neben den funktionellen Abhängigkeiten einer Aktualisierung zum Kraftfahrzeugzustand gibt es bei den Steuergeräten 7a, 7b, 7c hardware- und softwareseitige Abhängigkeiten. Eine hardwareseitige Abhängigkeit ist zum Beispiel eine Anbindung über ein Bus-System. Softwareseitige Abhängigkeiten können funktionell in der Software verschiedener Steuergeräte 7a, 7b, 7c eines Systems, aber auch systemübergreifende Abhängigkeiten sein, die sich als Softwareverbund beschreiben lassen. Gemeinsam genutzte Parameter in verschiedenen Softwaren verschiedener Steuergeräte 7a, 7b, 7c sind beispielsweise zu nennen. Dabei ist zu beachten, dass Steuergerätesoftwaren, die solche Abhängigkeiten aufweisen, zusammengehörig aktualisiert werden müssen. Die Abhängigkeiten der Softwaren werden durch einen umfassenden Softwareverbund behandelt, der durch die Übertragungseinrichtung 5 interpretiert wird und durch die Übertragungseinrichtung 5 die Softwareanteile an das jeweilige Steuergerät 7a, 7b, 7c übertragen werden. Als Merkmale dienen zum Beispiel die Fahrzeugidentifikationsnummer, die momentan verfügbare Softwareversion und die Softwareidentifikationsnummer.

Sollen mehrere Steuergeräte 7a, 7b, 7c im Kraftfahrzeug 6 von einer Kampagne erfasst werden, so müssen in der kraftfahrzeugexternen Speichereinrichtung 2 alle Steuergeräte 7a, 7b, 7c und die entsprechende Übertragungseinrichtung 5 genannt werden. Die Struktur der Domäne 8 muss dabei bekannt sein und berücksichtigt werden. Über eindeutige Kennung für die jeweilige Domäne 8 und die globale Kampagne wird sichergestellt, dass die Übertragungseinrichtung 5 ihre untergeordneten Steuergeräte 7a, 7b, 7c rechtzeitig aktualisiert. Sobald die Steuerdaten mit der Übertragungseinrichtung 5 synchronisiert worden sind, ist diese in der Lage, eigenständig das Aktualisierungspaket 3 von einer spezifischen Quelle, deren Adresse beispielsweise mittels einer Aktualisierungspaketinformation übertragen worden ist, herunterzuladen. Ist das Aktualisierungspaket 3 heruntergeladen, beginnt die Übertragungseinrichtung 5 selbstständig mit der Installation.

Handelt es sich bei dem Steuergerät 7a, 7b, 7c um ein Steuergerät 7a, 7b, 7c der Übertragungseinrichtung 5, so muss dieses getrennt von anderen zu aktualisierenden Steuergeräten 7a, 7b, 7c betrachtet werden, da ein Aktualisierungspaket 3 für die Übertragungseinrichtung 5 auch die Aktualisierung weiterer Steuergeräte 7a, 7b, 7c in der Domäne 8 beeinträchtigen kann. Dies kann insbesondere über ein eigenes Aktualisierungspaket 3 sichergestellt werden.

Sollte beispielsweise eine Aktualisierung innerhalb einer Domäne 8 durchgeführt werden, so kann das Kraftfahrzeug 6 über die Domänen 8 im Kraftfahrzeug 6 den Datendownload im Kraftfahrzeug 6 verteilen, da es aufgrund der Datenmenge nicht möglich ist, große Applikationen effizient über einen Pfad an verschiedene Steuergeräte 7a, 7b, 7c im Kraftfahrzeug 6 zu verteilen. Die Domänen 8 können gezielt über Regeln in der kraftfahrzeugexternen Speichereinrichtung 2 angesprochen werden, sodass hier die Aktualisierungspakete 3 gezielt für diese Domänen 8 gebildet werden können. Die Übertragungseinrichtung 5 managt nachfolgend die Aktualisierungspakete 3 der ihr zugeordneten Steuergeräte 7a, 7b, 7c und installiert diese.

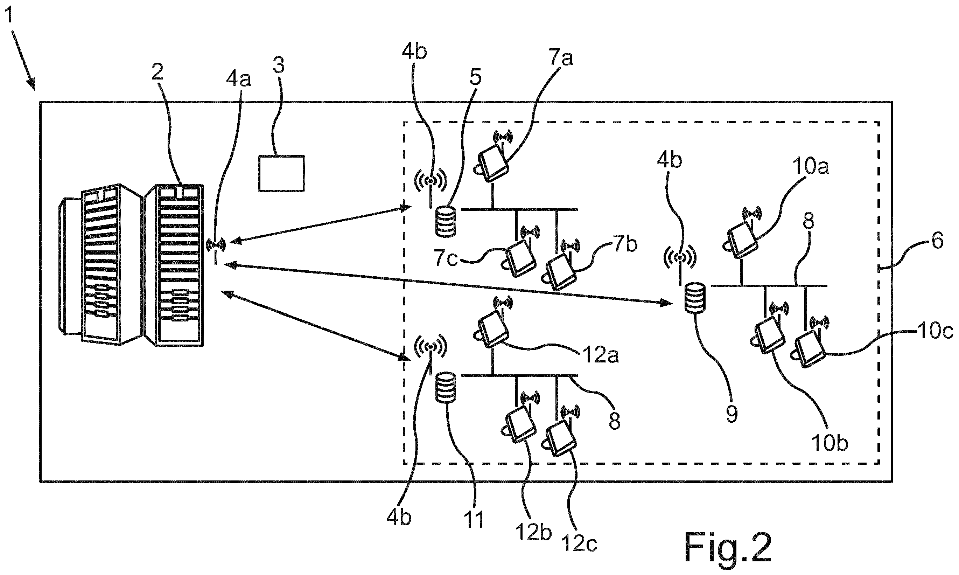

Fig. 2 zeigt in einer schematischen Ansicht eine weitere Ausführungsform des Systems 1. Fig. 2 beschreibt das System 1 zur Verteilung und Kontrolle von verteilten Aktualisierungspaketen 3 bei einer Mehrzahl von Domänen 8 durch mehrere Übertragungseinrichtungen 5, 9, 11. Eine jeweilige Übertragungseinrichtung 5, 9, 11 ist dabei in der Lage, ihr zugeordnete Steuergeräte 7a, 7b, 7c, 10a, 10b, 10c, 12a, 12b, 12c zu updaten und somit eine sogenannte Updatedomäne zu bilden. Jede Übertragungseinrichtung 5, 9, 11 synchronisiert sich drahtlos und separat mit der kraftfahrzeugexternen Speichereinrichtung 2 über jeweilige Kommunikationseinrichtungselemente 4b. Mittels einer fahrzeuginternen Synchronisation der Übertragungseinrichtungen 5, 9, 11 können somit domainübergreifende Aktualisierungspakete 3 realisiert werden, deren Ablauf von den Übertragungseinrichtungen 5, 9, 11 abgestimmt wird. Ebenfalls möglich ist, dass nicht jede der Übertragungseinrichtungen 5, 9, 11 ein diesem zugewiesenes Kommunikationseinrichtungselement 4b aufweist, sondern für die Mehrzahl von Übertragungseinrichtungen 5 ein gemeinsames Kommunikationseinrichtungselement 4b ausgebildet ist, so dass die Übertragungseinrichtungen 5, 9, 11 das eine Kommunikationseinrichtungselement 4b nutzen. Die Übertragungseinrichtungen 5, 9, 11 kommunizieren dann jeweils mit dem Kommunikationseinrichtungselement 4b, zum Beispiel als Head-Unit (Kopf-Einheit), über beispielsweise einen Bus, wobei das Kommunikationseinrichtungselement 4b dann wiederum beispielsweise über ein mobiles Netzwerk mit der externen Speichereinrichtung 2 kommuniziert. Die kraftfahrzeugexterne Speichereinrichtung 2 ist damit in der Lage, Software für unterschiedliche Steuergeräte 7a, 7b, 7c, 10a, 10b, 10c, 12a, 12b, 12c in verschiedenen Domänen 8 an verschiedene Kraftfahrzeuge 6 zu verteilen, Kampagnen zur Steuerung der Aktualisierungspakete 3 in die verschiedenen Steuergeräte 7a, 7b, 7c, 10a, 10b, 10c, 12a, 12b, 12c zu erstellen und zu kontrollieren, sowie deren Status zu überwachen.

In der Fig. 2 ist ferner zu sehen, dass das Kraftfahrzeug 6 eine Mehrzahl von Übertragungseinrichtungen 5, 9, 11 aufweist, wobei eine jeweilige Übertragungseinrichtung 5, 9, 11 der Mehrzahl von Übertragungseinrichtungen 5, 9, 11 den jeweiligen Übertragungsvorgang separat leiten kann und zum Installieren des Aktualisierungspakets 3 für zumindest ein jeweiliges der jeweiligen Übertragungseinrichtungen 5, 9, 11 zugeordnetes Steuergerät 7a, 7b, 7c, 10a, 10b, 10c, 12a, 12b, 12c ausgebildet ist. Ferner ist vorgesehen, dass der Übertragungsvorgang des zumindest einen Aktualisierungspakets 3 für die Mehrzahl von Übertragungseinrichtungen 5, 9, 11 und die Installation auf dem zumindest einen Steuergerät 7a, 7b, 7c, 10a, 10b, 10c, 12a, 12b, 12c mittels einer kraftfahrzeuginternen Leiteinrichtung leitbar ist. Ferner ist eine Übertragungseinrichtung 5, 9, 11 der Mehrzahl der Übertragungseinrichtungen 5, 9, 11 als Leiteinrichtung ausgewählt, welche das Leiten des Übertragungsvorgangs für die Mehrzahl von Übertragungseinrichtungen 5, 9, 11 und die Installation auf dem zumindest einen Steuergerät 7a, 7b, 7c, 10a, 10b, 10c, 12a, 12b, 12c durchführt.

Ferner kann vorgesehen sein, dass die Auswahl der Übertragungseinrichtung 5, 9, 11, welche den Übertragungsvorgang und die Installation auf dem zumindest einen Steuergerät 7a, 7b, 7c, 10a, 10b, 10c, 12a, 12b, 12c leitet, abhängig von dem zu übertragenden Aktualisierungspaket 3 sein.

Ferner kann vorgesehen sein, dass von der kraftfahrzeugexternen Speichereinrichtung 3 eine Aktualisierungspaketinformation vor dem Übertragungsvorgang des Aktualisierungspakets 3 an die Übertragungseinrichtung 5, 9, 11 übertragbar ist und/oder von der kraftfahrzeugexternen Speichereinrichtung 2 eine Aktualisierungspaketinformation vor dem Übertragungsvorgang des Aktualisierungspakets 3 an die Übertragungseinrichtung 5, 9, 11 übertragbar ist, wobei die Aktualisierungspaketinformation eine Information über einen zur kraftfahrzeugexternen Speichereinrichtung 2 separaten weiteren Speicherort des Aktualisierungspakets 3 enthält und die Übertragungseinrichtung 5, 9, 11 dazu ausgebildet ist, von dem weiteren Speicherort das Aktualisierungspaket 3 herunterzuladen.

Wie Fig. 2 zeigt, sind insbesondere im Kraftfahrzeug 6 mehrere Steuergeräte 7a, 7b, 7c, 10a, 10b, 10c, 12a, 12b, 12c verbaut, die jeweils über eine jeweilige Übertragungseinrichtung 5, 9, 11 synchronisiert werden können. Somit können zum Beispiel in der kraftfahrzeugexternen Speichereinrichtung 2 mehr Steuergeräte 7a, 7b, 7c, 10a, 10b, 10c, 12a, 12b, 12c eines bestimmten Typs, wie zum Beispiel Entertainment- oder sicherheitsrelevante Komponenten, erfasst werden, da eine Übertragungseinrichtung 5, 9, 11 eine feste Steuergerätzuordnung im Kraftfahrzeug 6 besitzt und somit eine definierte Kommunikationsstruktur vorgegeben ist. Zum anderen können dadurch auch neue Steuergerätetypen in der kraftfahrzeugexternen Speichereinrichtung 2 durch die Anbindung an neue Domänen 8 über deren Übertragungseinrichtung 5, 9, 11 erfasst werden.

Es kann vorgesehen sein, dass die Aktualisierungen über mehrere Domänen 8 hinweg geführt werden und mittels mehrerer Aktualisierungspakete 3 realisiert werden, die von einer jeweiligen Übertragungseinrichtung 5, 9, 11 der jeweiligen Domäne 8 heruntergeladen werden. Die Übertragungseinrichtungen 5, 9, 11 handeln über einen Steuerungsmechanismus die Installationsreihenfolge der Aktualisierungspakete 3 aus, wobei domainintern die jeweilige Übertragungseinrichtung 5, 9, 11 über die Installationsreihenfolge der Steuergerätesoftwaren anhand einer lokalen Priorität von der kraftfahrzeugexternen Speichereinrichtung 2 zugewiesen bekommt.

Werden Aktualisierungen über mehrere Domänen 8 hinweg durchgeführt, muss die Übertragungseinrichtung 5, 9, 11 einer Domäne 8 als leitende Einheit definiert werden, als ein sogenannter Master. Denn der Master wird im Kraftfahrzeug 6 für eine Kampagne gewählt und ist dafür verantwortlich, die Aktualisierungen in den Steuergeräten 7a, 7b, 7c, 10a, 10b, 10c, 12a, 12b, 12c seiner Domäne 8 zu aktivieren, aber auch die Aktualisierungen in anderen Domänen 8 zu steuern. Das ist relevant, da ein Steuergerät 7a, 7b, 7c, 10a, 10b, 10c, 12a, 12b, 12c in einer verteilten Applikation neue Parameter einführen kann, auf die sich eine Applikation in einem anderen Steuergerät 7a, 7b, 7c, 10a, 10b, 10c, 12a, 12b, 12c bezieht. Folglich ist es notwendig, stets diese Komponenten zu bevorzugen. Dies führt zu einer Hierarchiebildung unter den Aktualisierungen, die der Master steuert. Die Auswahl des Masters kann durch eine starre Implementierung der Master-Rolle in eine der Übertragungseinrichtungen 5, 9, 11 eines Kraftfahrzeugs 6 oder über ein Kommunikationsprotokoll zwischen den Übertragungseinrichtungen 5, 9, 11 dynamisch für ein Aktualisierungspaket 3 vorgenommen werden. Im Fall der dynamischen Auswahl muss der Master gewählt werden, sobald eine Übertragungseinrichtung 5, 9, 11 aus dem Aktualisierungspaket 3 erkennt, dass es sich um ein Domänen-übergreifendes Aktualisierungspaket 3 handelt. Diese Übertragungseinrichtung 5, 9, 11 muss dann alle anderen Übertragungseinrichtungen 5, 9, 11 darüber benachrichtigen und die Wahl initiieren, damit sie die nachfolgenden Download- und Installationsaktivitäten der einzelnen Domänen 8 steuern kann. Ein Kriterium für die Master-Wahl kann sein, dass diese Übertragungseinrichtung 5, 9, 11 zur Basisausstattung des Kraftfahrzeugs 6 gehört und nicht von Sonderausstattungen abhängig ist. Neben der Identifikation als Update-Master ist es notwendig, eine übergreifende Kampagnen-ID einzuführen, sodass andere Übertragungseinrichtungen 5, 9, 11 wissen, ob sie Teil der übergreifenden Kampagne sind und somit an der Aushandlung des Update-Masters teilnehmen müssen. Die Wahl des Update-Masters muss für jedes Update, mit anderen Worten für jedes Aktualisierungspaket 3, neu durchgeführt werden oder fest konfiguriert werden. Für den Austausch der Informationen zwischen den Übertragungseinrichtungen 5, 9, 11 zu den aktualisierbaren Steuergeräten 7a, 7b, 7c, 10a, 10b, 10c, 12a, 12b, 12c ist eine gemeinsame Schnittstelle definiert worden, deren Pflichten in allen Übertragungseinrichtungen 5, 9, 11 umgesetzt werden muss.

## Patentansprüche

1. System (1) zum Übertragen zumindest eines Aktualisierungspakets (3) für zumindest ein Steuergerät (7a, 7b, 7c, 10a, 10b, 10c, 12a, 12b, 12c) eines Kraftfahrzeugs (6), mit einer kraftfahrzeugexternen Speichereinrichtung (2), welche zum Abspeichern des Aktualisierungspakets (3) ausgebildet ist, mit einer Kommunikationseinrichtung (4a, 4b), welche zum Übertragen des Aktualisierungspakets (3) von der kraftfahrzeugexternen Speichereinrichtung (2) drahtlos an zumindest eine Übertragungseinrichtung (5, 9, 11) des Systems (1) ausgebildet ist, welche einen Übertragungsvorgang des Aktualisierungspakets (3) für das zumindest eine Steuergerät (7a, 7b, 7c, 10a, 10b, 10c, 12a, 12b, 12c) leitet und zum Installieren des Aktualisierungspakets (3) auf dem zumindest einen Steuergerät (7a, 7b, 7c, 10a, 10b, 10c, 12a, 12b, 12c) ausgebildet ist,
**dadurch gekennzeichnet, dass**
die zumindest eine als Download-Manager ausgebildete Übertragungseinrichtung (5, 9, 11) kraftfahrzeugintern angeordnet ist, wobei der Übertragungsvorgang des zumindest einen Aktualisierungspakets (3) für die Mehrzahl von Übertragungseinrichtungen (5, 9, 11) und die Installation auf dem zumindest einen Steuergerät (7a, 7b, 7c, 10a, 10b, 10c, 12a, 12b, 12c) mittels einer kraftfahrzeuginternen Leiteinrichtung leitbar ist und wobei eine Übertragungseinrichtung (5, 9, 11) der Mehrzahl von Übertragungseinrichtungen (5, 9, 11) als Leiteinrichtung ausgewählt ist, welche das Leiten des Übertragungsvorgangs für die Mehrzahl von Übertragungseinrichtungen (5, 9, 11) und die Installation auf dem zumindest einen Steuergerät (7a, 7b, 7c, 10a, 10b, 10c, 12a, 12b, 12c) durchführt, wobei die Vielzahl von Übertragungseinrichtungen (5, 9, 11) nur in dem Kraftfahrzeug (6) ausgebildet ist, wobei unter Leiten das Steuern der Installation und/oder das Berücksichtigen von funktionalen Abhängigkeiten definiert ist.

2. System (1) nach Anspruch 1,
**dadurch gekennzeichnet, dass**
die zumindest eine Übertragungseinrichtung (5, 9, 11) abhängig von einem Entscheidungskriterium den Übertragungsvorgang und die Installation auf dem zumindest einen Steuergerät (7a, 7b, 7c, 10a, 10b, 10c, 12a, 12b, 12c) leitet.

3. System nach Anspruch 2,
**dadurch gekennzeichnet, dass**
die Übertragungseinrichtung (5, 9, 11) derart ausgebildet ist, dass die Übertragungseinrichtung (5, 9, 11) in Abhängigkeit eines funktionalen Entscheidungskriteriums den Übertragungsvorgang und die Installation auf dem zumindest einen Steuergerät (7a, 7b, 7c, 10a, 10b, 10c, 12a, 12b, 12c) leitet.

4. System (1) nach Anspruch 2 oder 3,
**dadurch gekennzeichnet, dass**
die Übertragungseinrichtung (5, 9, 11) derart ausgebildet ist, dass die Übertragungseinrichtung (5, 9, 11) in Abhängigkeit eines Entscheidungskriteriums, welches eine physische Komponente des Steuergeräts (7a, 7b, 7c, 10a, 10b, 10c, 12a, 12b, 12c) betrifft, den Übertragungsvorgang und die Installation auf dem zumindest einen Steuergerät (7a, 7b, 7c, 10a, 10b, 10c, 12a, 12b, 12c) leitet.

5. System (1) nach einem der Ansprüche 2 bis 4,
**dadurch gekennzeichnet, dass**
die Übertragungseinrichtung (5, 9, 11) derart ausgebildet ist, dass die Übertragungseinrichtung (5, 9, 111) in Abhängigkeit eines Entscheidungskriteriums, welches eine veränderbare Komponente des Steuergeräts (7a, 7b, 7c, 10a, 10b, 10c, 12a, 12b, 12c) betrifft, den Übertragungsvorgang und die Installation auf dem zumindest einen Steuergerät (7a, 7b, 7c, 10a, 10b, 10c, 12a, 12b, 12c) leitet.

6. System (1) nach einem der vorhergehenden Ansprüche,
**dadurch gekennzeichnet, dass**
das Kraftfahrzeug (6) eine Mehrzahl von Steuergeräten (7a, 7b, 7c, 10a, 10b, 10c, 12a, 12b, 12c) aufweist und die Übertragungseinrichtung (5, 9, 11) den Übertragungsvorgang des Aktualisierungspakets (3) für die Mehrzahl von Steuergeräten (7a, 7b, 7c, 10a, 10b, 10c, 12a, 12b, 12c) leitet und zum Installieren des Aktualisierungspakets (3) auf der Mehrzahl von Steuergeräten (7a, 7b, 7c, 10a, 10b, 10c, 12a, 12b, 12c) ausgebildet ist.

7. System (1) nach einem der vorhergehenden,
**dadurch gekennzeichnet, dass**
die Übertragungseinrichtung (5, 9, 11) funktionsreduziert ausgebildet ist, so dass diese den Übertragungsvorgang und ein Weiterleiten des Aktualisierungspakets (3) an die Mehrzahl von Steuergeräten (7a, 7b, 7c, 10a, 10b, 10c, 12a, 12b, 12c) durchführt.

8. System (1) nach einem der vorhergehenden Ansprüche,
**dadurch gekennzeichnet, dass**
das Kraftfahrzeug (6) eine Mehrzahl von Steuergeräten (7a, 7b, 7c, 10a, 10b, 10c, 12a, 12b, 12c) aufweist und die Übertragungseinrichtung (5, 9, 11) den Übertragungsvorgang einer Mehrzahl von Aktualisierungspaketen (3) für die Mehrzahl von Steuergeräten (7a, 7b, 7c, 10a, 10b, 10c, 12a, 12b, 12c) leitet und zum Installieren der Mehrzahl der Aktualisierungspakete (3) auf der Mehrzahl von Steuergeräten (7a, 7b, 7c, 10a, 10b, 10c, 12a, 12b, 12c) ausgebildet ist.

9. System (1) nach einem der vorhergehenden Ansprüche ,
**dadurch gekennzeichnet, dass**
die Auswahl der Übertragungseinrichtung (5, 9, 11) welche den Übertragungsvorgang und die Installation auf dem zumindest einen Steuergerät (7a, 7b, 7c, 10a, 10b, 10c, 12a, 12b, 12c) bei einer Mehrzahl von Übertragungseinrichtungen (5, 9, 11) leitet, abhängig von dem zu übertragenden Aktualisierungspaket (3) ist.

10. System (1) nach einem der vorhergehenden Ansprüche,
**dadurch gekennzeichnet, dass**
von der kraftfahrzeugexternen Speichereinrichtung (2) eine Aktualisierungspaketinformation vor dem Übertragungsvorgang des Aktualisierungspakets (3) an die Übertragungseinrichtung (5, 9, 11) übertragbar ist.

11. System (1) nach einem der vorhergehenden Ansprüche,
**dadurch gekennzeichnet, dass**
von der kraftfahrzeugexternen Speichereinrichtung (2) eine Aktualisierungspaketinformation vor dem Übertragungsvorgang des Aktualisierungspakets (3) an die Übertragungseinrichtung (5, 9, 11) übertragbar ist, wobei die Aktualisierungspaketinformation eine Information über einen zur kraftfahrzeugexternen Speichereinrichtung (2) separaten weiteren Speicherort des Aktualisierungspakets (3) enthält und die Übertragungseinrichtung (5, 9, 11) dazu ausgebildet ist, von dem weiteren Speicherort das Aktualisierungspaket (3) herunterzuladen

12. System (1) nach einem der vorhergehenden Ansprüche,
**dadurch gekennzeichnet, dass**
das zumindest eine Steuergerät (7a, 7b, 7c, 10a, 10b, 10c, 12a, 12b, 12c) als ein Steuergerät (7a, 7b, 7c, 10a, 10b, 10c, 12a, 12b, 12c) der Übertragungseinrichtung (5, 9, 11) oder als ein Steuergerät (7a, 7b, 7c, 10a, 10b, 10c, 12a, 12b, 12c) für eine Funktionseinheit des Kraftfahrzeugs (6) ausgebildet ist.

13. System (1) nach einem der vorhergehenden Ansprüche,
**dadurch gekennzeichnet, dass**
mittels der Übertragungseinrichtung (5, 9, 11) ein Statusinformationssignal an die kraftfahrzeugexterne Speichereinrichtung (2) übertragbar ist, wobei das Statusinformationssignal einen Status bezüglich des Übertragungsvorgangs umfassen kann.

14. System (1) nach einem der vorhergehenden Ansprüche,
**dadurch gekennzeichnet, dass**
mittels der Übertragungseinrichtung (5, 9, 11) ein Statusinformationssignal an die kraftfahrzeugexterne Speichereinrichtung (2) übertragbar ist, wobei das Statusinformationssignal einen Status bezüglich der Installation auf dem Steuergerät (7a, 7b, 7c, 10a, 10b, 10c, 12a, 12b, 12c) umfassen kann.

## Claims

1. System (1) for transmitting at least one update package (3) for at least one control unit (7a, 7b, 7c, 10a, 10b, 10c, 12a, 12b, 12c) of a motor vehicle (6), with a motor vehicle-external storage device (2) designed for storing the update package (3), with a communication device (4a, 4b) designed for transmitting the update package (3) from the motor vehicle-external storage device (2) wirelessly to at least one transmitting device (5, 9, 11) of the system (1), which transmitting device directs a transmission process of the update package (3) for the at least one control unit (7a, 7b, 7c, 10a, 10b, 10c, 12a, 12b, 12c) and is designed for installing the update package (3) on the at least one control unit (7a, 7b, 7c, 10a, 10b, 10c, 12a, 12b, 12c),
**characterised in that**
the at least one transmitting device (5, 9, 11), designed as download manager, is located inside the motor vehicle, wherein the transmission process of the at least one update package (3) for the plurality of transmitting devices (5, 9, 11) and the installation on the at least one control unit (7a, 7b, 7c, 10a, 10b, 10c, 12a, 12b, 12c) can be directed by means of a motor vehicle-internal directing device and wherein one transmitting device (5, 9, 11) of the plurality of transmitting devices (5, 9, 11) is selected as directing device directing the transmission process for the plurality of transmitting devices (5, 9, 11) and the installation on the at least one control unit (7a, 7b, 7c, 10a, 10b, 10c, 12a, 12b, 12c), wherein the plurality of transmitting devices (5, 9, 11) is only formed in the motor vehicle (6), the term directing defining the control of the installation and/or the consideration of functional dependencies.

2. System (1) according to claim 1,
**characterised in that**
the at least one transmitting device (5, 9, 11) directs the transmission process and the installation on the at least one control unit (7a, 7b, 7c, 10a, 10b, 10c, 12a, 12b, 12c) as a function of a decision criterion.

3. System (1) according to claim 2,
**characterised in that**
the transmitting device (5, 9, 11) is designed such that the transmitting device (5, 9, 11) directs the transmission process and the installation on the at least one control unit (7a, 7b, 7c, 10a, 10b, 10c, 12a, 12b, 12c) as a function of a functional decision criterion.

4. System (1) according to claim 2 or 3,
**characterised in that**
the transmitting device (5, 9, 11) is designed such that the transmitting device (5, 9, 11) directs the transmission process and the installation on the at least one control unit (7a, 7b, 7c, 10a, 10b, 10c, 12a, 12b, 12c) as a function of a decision criterion relating to a physical component of the control unit (7a, 7b, 7c, 10a, 10b, 10c, 12a, 12b, 12c).

5. System (1) according to any of claims 2 to 4,
**characterised in that**
the transmitting device (5, 9, 11) is designed such that the transmitting device (5, 9, 11) directs the transmission process and the installation on the at least one control unit (7a, 7b, 7c, 10a, 10b, 10c, 12a, 12b, 12c) as a function of a decision criterion relating to a variable physical component of the control unit (7a, 7b, 7c, 10a, 10b, 10c, 12a, 12b, 12c).

6. System (1) according to any of the preceding claims,
**characterised in that**
the motor vehicle (6) has a plurality of control units (7a, 7b, 7c, 10a, 10b, 10c, 12a, 12b, 12c) and the transmitting device (5, 9, 11) directs the transmission process of the update package (3) for the plurality of control units (7a, 7b, 7c, 10a, 10b, 10c, 12a, 12b, 12c) and is designed for installing the update package (3) on the plurality of control units (7a, 7b, 7c, 10a, 10b, 10c, 12a, 12b, 12c).

7. System (1) according to any of the preceding claims,
**characterised in that**
the transmitting device (5, 9, 11) is designed in a function-reduced manner, so that it performs the transmission process and the forwarding of the update package (3) to the plurality of control units (7a, 7b, 7c, 10a, 10b, 10c, 12a, 12b, 12c).

8. System (1) according to any of the preceding claims,
**characterised in that**
the motor vehicle (6) has a plurality of control units (7a, 7b, 7c, 10a, 10b, 10c, 12a, 12b, 12c) and the transmitting device (5, 9, 11) directs the transmission process of a plurality of update packages (3) for the plurality of control units (7a, 7b, 7c, 10a, 10b, 10c, 12a, 12b, 12c) and is designed for installing the plurality of update packages (3) on the plurality of control units (7a, 7b, 7c, 10a, 10b, 10c, 12a, 12b, 12c).

9. System (1) according to any of the preceding claims,
**characterised in that**
the selection of the transmitting device (5, 9, 11) directing the transmission process and the installation on the at least one control unit (7a, 7b, 7c, 10a, 10b, 10c, 12a, 12b, 12c) in the case of a plurality of transmitting devices (5, 9, 11) depends on the update package (3) to be transmitted.

10. System (1) according to any of the preceding claims,
**characterised in that**
an update package information can be transmitted by the motor vehicle-external storage device (2) to the transmitting device (5, 9, 11) before the transmission process of the update package (3).

11. System (1) according to any of the preceding claims,
**characterised in that**
an update package information can be transmitted by the motor vehicle-external storage device (2) to the transmitting device (5, 9, 11) before the transmission process of the update package (3), wherein the update package information contains information about a further storage location of the update package (3), which is separate from the motor vehicle-external storage device (2), and the transmitting device (5, 9, 11) is designed for downloading the update package (3) from the further storage location.

12. System (1) according to any of the preceding claims,
**characterised in that**
the at least one control unit (7a, 7b, 7c, 10a, 10b, 10c, 12a, 12b, 12c) is designed as a control unit (7a, 7b, 7c, 10a, 10b, 10c, 12a, 12b, 12c) of the transmitting device (5, 9, 11) or as a control unit (7a, 7b, 7c, 10a, 10b, 10c, 12a, 12b, 12c) for a functional unit of the motor vehicle (6).

13. System (1) according to any of the preceding claims,
**characterised in that**
a status information signal can be transmitted to the motor vehicle-external storage device (2) by means of the transmitting device (5, 9, 11), wherein the status information signal can comprise a status relating to the transmission process.

14. System (1) according to any of the preceding claims,
**characterised in that**
a status information signal can be transmitted to the motor vehicle-external storage device (2) by means of the transmitting device (5, 9, 11), wherein the status information signal can comprise a status relating to the installation on the control unit (7a, 7b, 7c, 10a, 10b, 10c, 12a, 12b, 12c).

## Revendications

1. Système (1) de transfert d'au moins un paquet de mise à jour (3) pour au moins un appareil de commande (7a, 7b, 7c, 10a, 10b, 12a, 12b, 12c) d'un véhicule à moteur (6), comprenant un dispositif de stockage (2) externe au véhicule à moteur, lequel est conçu pour stocker le paquet de mise à jour (3), comprenant un dispositif de communication (4a, 4b) qui est conçu pour transférer sans fil le paquet de mise à jour (3) depuis le dispositif de stockage (2) externe au véhicule à moteur à au moins un dispositif de transfert (5, 9, 11) du système (1), lequel conduit un processus de transfert du paquet de mise à jour (3) pour l'au moins un appareil de commande (7a, 7b, 7c, 10a, 10b, 12a, 12b, 12c) et est conçu pour installer le paquet de mise à jour (3) sur l'au moins un appareil de commande (7a, 7b, 7c, 10a, 10b, 12a, 12b, 12c),
**caractérisé en ce que**
le dispositif de transfert (5, 9, 11) conçu au moins sous la forme d'un gestionnaire de téléchargement est disposé à l'intérieur du véhicule à moteur, dans lequel le processus de transfert de l'au moins un paquet de mise à jour (3) pour la pluralité des dispositifs de transfert (5, 9, 11) et l'installation sur l'au moins un appareil de commande (7a, 7b, 7c, 10a, 10b, 12a, 12b, 12c) peut être menée au moyen d'un dispositif de guidage interne au véhicule à moteur et dans lequel un dispositif de transfert (5, 9, 11) de la pluralité de dispositifs de transfert (5, 9, 11) est sélectionné comme équipement de commande, lequel effectue l'exécution du processus de transfert pour la pluralité de dispositifs de transfert (5, 9, 11) et l'installation sur l'au moins un appareil de commande (7a, 7b, 7c, 10a, 10b, 12a, 12b, 12c), dans lequel la pluralité de dispositifs de transfert (5, 9, 11) est conçue uniquement dans le véhicule à moteur (6), dans lequel la commande de l'installation et/ou la prise en considération des commandes fonctionnelles est définie comme exécution.

2. Système (1) selon la revendication 1,
**caractérisé en ce que**
l'au moins un dispositif de transfert (5, 9, 11) mène en fonction d'un critère de décision le processus de transfert et l'installation sur l'au moins un dispositif de commande (7a, 7b, 7c, 10a, 10b, 12a, 12b, 12c).

3. Système selon la revendication 2,
**caractérisé en ce que**
le dispositif de transfert (5, 9, 11) est conçu de telle sorte que le dispositif de transfert (5, 9, 11) mène en fonction d'un critère de décision fonctionnelle le processus de transfert et l'installation sur l'au moins un dispositif de commande (7a, 7b, 7c, 10a, 10b, 12a, 12b, 12c).

4. Système (1) selon la revendication 2 ou 3,
**caractérisé en ce que**
le dispositif de transfert (5, 9, 11) est conçu de telle sorte que le dispositif de transfert (5, 9, 11) mène en fonction d'un critère de décision qui concerne un composant physique du dispositif de commande (7a, 7b, 7c, 10a, 10b, 12a, 12b, 12c), le processus de transfert et l'installation sur l'au moins un dispositif de commande (7a, 7b, 7c, 10a, 10b, 12a, 12b, 12c).

5. Système (1) selon l'une quelconque des revendications 2 à 4,
**caractérisé en ce que**
le dispositif de transfert (5, 9, 11) est conçu de telle sorte que le dispositif de transfert (5, 9, 11) mène en fonction d'un critère de décision, qui concerne un composant modifiable de l'appareil de commande (7a, 7b, 7c, 10a, 10b, 12a, 12b, 12c), le processus de transfert et l'installation sur l'au moins un appareil de commande (7a, 7b, 7c, 10a, 10b, 12a, 12b, 12c).

6. Système (1) selon l'une quelconque des revendications précédentes,
**caractérisé en ce que**
le véhicule à moteur (6) présente une pluralité d'appareils de commande (7a, 7b, 7c, 10a, 10b, 12a, 12b, 12c) et le dispositif de transfert (5, 9, 11) mèe le processus de transfert du paquet de mise à jour (3) pour la pluralité des appareils de commande (7a, 7b, 7c, 10a, 10b, 12a, 12b, 12c) et est conçu pour installer le paquet de mise à jour (3) sur la pluralité d'appareils de commande (7a, 7b, 7c, 10a, 10b, 12a, 12b, 12c).

7. Système (1) selon l'une quelconque des revendications précédentes,
**caractérisé en ce que**
le dispositif de transfert (5, 9, 11) est à fonction réduite, de sorte que celui-ci effectue le processus de transfert et une transmission du paquet de mise à jour (3) à la pluralité d'appareils de commande (7a, 7b, 7c, 10a, 10b, 12a, 12b, 12c).

8. Système (1) selon l'une quelconque des revendications précédentes,
**caractérisé en ce que**
le véhicule à moteur (6) présente une pluralité d'appareils de commande ((7a, 7b, 7c, 10a, 10b, 12a, 12b, 12c)) et le dispositif de transfert (5, 9, 11) mène le processus de transfert d'une pluralité de paquets de mise à jour (3) pour la pluralité d'appareils de commande (7a, 7b, 7c, 10a, 10b, 12a, 12b, 12c) et est conçu pour installer la pluralité des paquets de mise à jour (3) sur la pluralité d'appareils de commande (7a, 7b, 7c, 10a, 10b, 12a, 12b, 12c).

9. Système (1) selon l'une quelconque des revendications précédentes,
**caractérisé en ce que**
la sélection du dispositif de transfert (5, 9, 11) qui mène le processus de transfert et l'installation sur l'au moins un appareil de commande (7a, 7b, 7c, 10a, 10b, 12a, 12b, 12c) pour une pluralité de dispositifs de transfert (5, 9, 11), dépend du paquet de mise à jour (3) à transférer.

10. Système (1) selon l'une quelconque des revendications précédentes,
**caractérisé en ce que**
depuis le dispositif de mémoire (2) externe au véhicule à moteur une information de paquet de mise à jour peut être transférée avant le processus de transfert du paquet de mise à jour (3) au dispositif de transfert (5, 9, 11).

11. Système (1) selon l'une quelconque des revendications précédentes,
**caractérisé en ce que**
depuis le dispositif de mémoire (2) externe au véhicule moteur une information de paquet de mise à jour peut être transférée avant le processus de transfert du paquet de mise à jour (3) au dispositif de transfert (5, 9, 11), dans lequel l'information de paquet de mise à jour contient une information concernant un autre emplacement de mémorisation séparé du paquet de mise à jour (3) par rapport à un dispositif de mémoire (2) externe au véhicule à moteur et le dispositif de transfert (5, 9, 11) est conçu pour télécharger vers l'avant le paquet de mise à jour (3) depuis l'autre emplacement en mémoire.

12. Système (1) selon l'une quelconque des revendications précédentes,
**caractérisé en ce que**
l'au moins un appareil de commande (7a, 7b, 7c, 10a, 10b, 12a, 12b, 12c) est conçu sous la forme d'un appareil de commande (7a, 7b, 7c, 10a, 10b, 12a, 12b, 12c) du dispositif de transfert (5, 9, 11) ou sous la forme d'un appareil de commande (7a, 7b, 7c, 10a, 10b, 12a, 12b, 12c) pour une unité fonctionnelle du véhicule à moteur (6).

13. Système (1) selon l'une quelconque des revendications précédentes,
**caractérisé en ce que**
au moyen du dispositif de transfert (5, 9, 11) un signal d'information de statut peut être transféré au dispositif de mémoire (2) externe au véhicule à moteur, dans lequel le signal d'information de statut peut comprendre un statut relatif au processus de transfert.

14. Système (1) selon l'une quelconque des revendications précédentes,
**caractérisé en ce que**
au moyen du dispositif de transfert (5, 9, 11) un signal d'information de statut peut être transféré au dispositif de mémoire (2) externe au véhicule à moteur, dans lequel le signal d'information de statut peut comprendre un statut relatif à l'installation sur l'appareil de commande (7a, 7b, 7c, 10a, 10b, 12a, 12b, 12c).
